# EUROPÄISCHE PATENTSCHRIFT

(11) **EP 0 866 933 B1**
(45) Veröffentlichungstag und Bekanntmachung des Hinweises auf die Patenterteilung: **16.01.2002**
(21) Anmeldenummer: 96945858.7
(22) Anmeldetag: 31.10.1996
(51) Int. Cl.: F16J 1/02

(54) **KOLBEN-ZYLINDER-BAUEINHEIT**
PISTON-CYLINDER ASSEMBLY
ENSEMBLE PISTON-CYLINDRE

(30) Priorität: 16.12.1995 DE 19547157
(43) Veröffentlichungstag der Anmeldung: 30.09.1998
(73) Patentinhaber: Mahle GmbH, 70376 Stuttgart (DE)
(72) Erfinder: BUBECK, Eberhard, D-70734 Fellbach (DE)
(86) Internationale Anmeldenummer: DE9602102
(87) Internationale Veröffentlichungsnummer: WO9722820

(56) Entgegenhaltungen:
- WO-A-80/01704
- US-A- 2 966 382

## Beschreibung

Die Erfindung betrifft eine Kolben-Zylinder-Baueinheit nach dem Oberbegriff des Patentanspruchs 1. Eine derartige Kolben-Zylinder-Baueinheit ist auf dem MAHLE-Kolloquium 1973 im Vortrag "Pendelschaftkolben" vorgestellt worden. In Bild 2 des Vortrags werden drei schaftlose Kolben mit Durchmessern von 111,1 mm, 82 mm und 75 mm vorgestellt, die im Motorenversuch getestet wurden. Im zugehörigen Text wird als Versuchsergebnis berichtet, daß sich die Ringzone derartiger Kolben durchaus selbst führen kann und daß dabei wesentlich verkleinerte Ringzonenspiele erreicht werden können. Es wird anschließend ausgeführt, daß ein schaftloser Kolben selbstverständlich für die Serie nicht in Erwägung gezogen werde, weil es Betriebsbedingungen gebe, bei denen die Seitenführung des Pleuels nicht ausreichend gewährleistet sei.

Ein weiterer Nachteil derartiger Kolben ist der hohe Verschleiß der Tragflächen, insbesondere der Kantenverschleiß.

Auch die bei dieser Konstruktion möglichen und notwendigen engen Spiele sind nur solange von Vorteil, wie keine Störungen im kennfeldgeregelten Verbrennungsablauf auftreten. Dies ist jedoch nach bisherigen Erfahrungen nicht gewährleistet. Bei Störungen im Verbrennungsablauf und erhöhtem Temperaturniveau am Kolbenkopf sind Kolbenfresser zu erwarten.

Die Erfindung beschäftigt sich daher mit dem Problem, einen schaftlosen Kolben serientauglich auszulegen und die genannten Nachteile zu vermeiden.

Dieses Problem wird bei einem gattungsgemäßen Kolben gelöst durch die kennzeichnenden Merkmale des Anspruchs 1. Vorteilhafte Weiterbildungen sind Gegenstand der Unteransprüche.

Die Führung des Kolbens durch einen oder ggfs. zwei auf die Naben aufgesetzte Tragring bzw. -ringe, dessen bzw. deren zur Gewährleistung ausreichender Stabilität notwendige Mindesthöhe in Motorenversuchen bestimmt werden kann, wobei diese in erster Linie vom Gewicht des Kolbens, vom Durchmesser des Kolbens und von der Kolbengeschwindigkeit abhängt, gewährleistet eine ausreichende Seitenführung des Pleuels und reduziert den Kantenverschleiß deutlich. Durch die Führung des Kolbens sowohl im Bereich der Ringpartie als auch im Bereich des Tragrings können im Bereich der Ringpartie des Kolbens Spiele vorgesehen werden, die auch bei ungünstigen bzw. nicht eingeplanten Betriebsbedingungen noch nicht zu Kolbenfressern führen.

Im Vergleich mit Kolben mit Schaft - insbesondere Kolben mit Pendelschaft - ergibt sich durch Wegfall des Schafts ein deutlicher Gewichtsvorteil und ein Preisvorteil. Diese Vorteile müssen allerdings mit dem Nachteil erkauft werden, daß die mit der Gelenkbauweise erzielten Vorteile entfallen.

Gemäß Unteransprüchen 2 bis 7 weist der Tragring entweder selbst ein Innengewinde zum Aufschrauben auf die mit einem Außengewinde versehenen Naben auf oder er wird mit Stiften oder Schrauben, durch Aufschrumpfen, Schweißen bzw. durch seine eigene Federspannung an den Naben fixiert.

Gemäß Anspruch 9 liegt der Schwerpunkt des Tragrings in einem definierten Bereich etwa auf Höhe der Bolzenachse. Die Unteransprüche 10 bis 12 definieren maximale Höhen des Tragringes.

Zwar sind Tragringe an Kolben an sich z. B. aus US-PS 2,966,382 bekannt, jedoch nur im Zusammenhang mit Kolben, die auch einen Schaft aufweisen. Dabei bestehen die Tragringe regelmäßig aus einem Eisen- bzw. Stahlwerkstoff und sollen den aus einem Al-Werkstoff bestehenden Schaft gegen abrasiven Verschleiß schützen. Nicht bekannt sind direkt auf die Naben aufgesetzte Tragringe.

Prinzipiell geht die Erfindung von einem Oberteil eines Pendelschaftkolbens aus, bei dem anstatt eines gelenkig mit dem Kolben verbundenen Schafts ein einfacher Tragring vorzugsweise auf Höhe bzw. im Bereich der Bolzenachse auf die Naben gesetzt ist.

Zur weiteren Stabilisierung kann - falls erforderlichnoch ein zweiter Tragring auf die Naben gesetzt werden.

Der Tragring kann auch zweiteilig ausgeführt sein.

Bei Bedarf kann der Tragring auch mit den bei Kolben üblichen Laufschichten beschichtet sein.

Bei Kolben, die im Kolbenkopf einen Kühlkanal aufweisen, dessen untere Begrenzungswand durch ein - an seinem Innenradius in einer Nut in der Nabenabstützung liegendeszweiteiliges kreisringförmiges Blech gebildet wird, kann die Fixierung des Blechs am Außenradius vorteilhaft durch eine zwischen Tragring und Blech eingeklemmte Distanzhülse, die einen Innendurchmesser aufweist, der etwa dem Innendurchmesser des Tragrings entspricht, erfolgen. Die erforderliche Verspannung der Distanzhülse kann durch eine Ausführung des Tragrings gemäß Anspruch 2 ermöglicht werden.

Bei Fixierung des Tragrings etwa auf Höhe der Bolzenachse kann der Tragring auch mittels im Stand der Technik bekannter Pilzsicherungen aus Plastik, die stirnseitig in den Bolzen eingeschoben werden und gegen den Tragring anlaufen können, die Funktion der Bolzensicherungsringe übernehmen.

Bei Verwendung eines einteiligen, geschlitzten Tragrings kann die Pilzsicherung durch Einbringen von zwei - durch einen Steg getrennten - Nuten in den Pilz, von denen jede ein Stoßende des Tragringes aufnimmt, auch als Verdrehsicherung für den Tragring gestaltet werden. Dabei liegt der Steg im Ringstoß. Gleichzeitig wird durch diese Fixierung bei ausreichend enger axialer Passung der Tragringenden in den Nuten das Laufverhalten des Tragrings im Bereich des Ringstoßes stabilisiert.

Die Montage des Kolben-Pleuel-Verbunds erfolgt, indem der Tragring über das kleine Pleuelauge des montagefertigen Pleuels geschoben wird. Anschließend wird das Pleuel durch den Bolzen mit dem Kolben verbunden. Danach wird der Tragring auf den Naben fixiert bzw. bei nach innen spannenden Tragringen in eine in die Naben eingedrehte Nut eingesetzt.

Als Kolben- und Tragringwerkstoffe kommen alle gebräuchlichen Kolbenwerkstoffe in Betracht. Vorgzugsweise wird der Tragring aus GGL oder GGG hergestellt.

Die Tragringe können einen rechteckigen oder trapezförmigen Querschnitt oder ein U-Profil oder ein T-Profil aufweisen.

Der Tragring liegt vorzugsweise direkt - ohne Zwischenschaltung von Adapterstücken - auf den Naben bzw. in einer in die Naben eingedrehten Nut. Bei Bedarf können jedoch auch Adapterstücke verwendet werden.

Die Erfindung wird im folgenden anhand eines Ausführungsbeispiels beschrieben. Es zeigt:

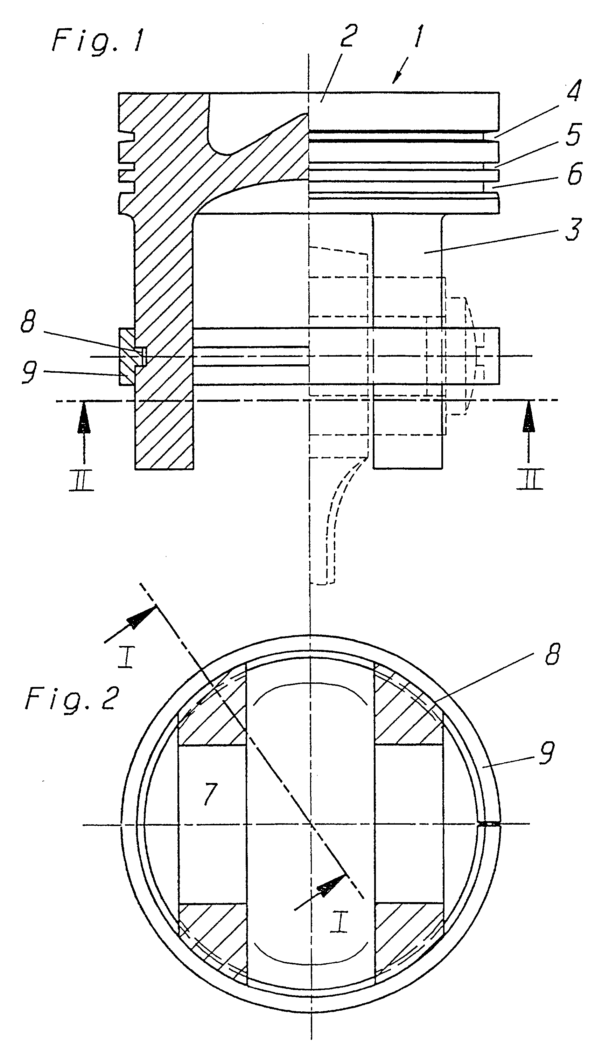

- Fig. 1: einen erfindungsgemäßen Kolben mit Tragring, linksseitig gem. Fig. 2 geschnitten,
- Fig. 2: einen Querschnitt durch den erfindungsgemäßen Kolben unterhalb des Tragrings.

Ein schaftloser Kolben 1 besteht aus einem Kolbenkopf 2 und vom Kolbenkopf ausgehenden Naben 3 und radial in den Kolbenkopf eingestochenen Ringnuten 4, 5 und 6 zur Aufnahme je eines Kolbenrings. Die Naben 3 weisen Bohrungen 7 zur Aufnahme eines Kolbenbolzens auf. In Umfangsrichtung des Kolbens ist auf Höhe der Bolzenachse eine Nut 8 in die Naben eingestochen, wobei die Nut sich nur über wenige Winkelgrad erstreckt, je angestochener Nabenfläche Nabe ca. 15 - 30 Grad.

Beide Naben werden jeweils druck- und gegendruckseitig eingestochen, so daß die Nut über alle vier Flächen aufaddiert einen Winkelbereich von ca. 60 - 120 Grad umfaßt. In der Nut 8 liegt - direkt auf den Naben - nach innen federnd ein Tragring 9 mit T-förmigem Querschnitt, der in gleitendem Kontakt mit einer Zylinderwandung steht und so zusammen mit der Ringpartie den Kolben im Zylinder führt.

## Patentansprüche

1. Kolben-Zylinder-Baueinheit für einen Verbrennungsmotor mit einem schaftlosen Kolben (1), der aus einem Kolbenkopf (2) mit einer Ringpartie zur Aufnahme von Kolbenringen und vom Kolbenkopf (2) ausgehenden Naben (3) mit Nabenbohrungen (7) zur Aufnahme eines Kolbenbolzens besteht, und einem Zylinder, in dem der Kolben (1) gleitverschiebbar angeordnet ist,
**dadurch gekennzeichnet,**
**daß** mindestens ein Tragring (9) auf die Naben (3) aufgesetzt ist und zusammen mit dem Kolbenkopf (2) den Kolben (1) im Zylinder führt.

2. Kolben-Zylinder-Baueinheit nach Anspruch 1,
**dadurch gekennzeichnet,**
**daß** der Tragring (9) ein Innengewinde und die Naben (3) ein Außengewinde aufweisen und der Tragring (9) auf die Naben (3) aufgeschraubt ist.

3. Kolben-Zylinder-Baueinheit nach Anspruch 1,
**dadurch gekennzeichnet,**
**daß** der Tragring (9) mit mehreren Schrauben auf die Naben (3) aufgeschraubt ist.

4. Kolben-Zylinder-Baueinheit nach Anspruch 1,
**dadurch gekennzeichnet,**
**daß** der Tragring (9) auf die Naben (3) aufgeschrumpft ist.

5. Kolben-Zylinder-Baueinheit nach Anspruch 1,
**dadurch gekennzeichnet,**
**daß** der Tragring (9) nach innen spannend in einer in den Naben (3) liegenden Nut (8) liegt.

6. Kolben-Zylinder-Baueinheit nach Anspruch 1,
**dadurch gekennzeichnet,**
**daß** der Tragring (9) mit den Naben (3) verstiftet ist.

7. Kolben-Zylinder-Baueinheit nach Anspruch 1,
**dadurch gekennzeichnet,**
**daß** der Tragring (9) mit den Naben (3) verschweißt ist.

8. Kolben-Zylinder-Baueinheit nach einem der vorhergehenden Ansprüche,
**dadurch gekennzeichnet,**
**daß** der Tragring (9) einen T-förmigen Querschnitt aufweist.

9. Kolben-Zylinder-Baueinheit nach einem der vorhergehenden Ansprüche,
**dadurch gekennzeichnet,**
**daß** der Schwerpunkt des Tragrings (9) in einer senkrecht zur Tragfläche des Tragrings liegenden Ebene liegt, welche maximal 15% des Zylinderdurchmessers unterhalb oder oberhalb der Bolzenachsenebene angeordnet ist.

10. Kolben-Zylinder-Baueinheit nach einem der vorhergehenden Ansprüche,
**dadurch gekennzeichnet,**
**daß** die Höhe des Tragrings (9) kleiner ist als der Durchmesser der Nabenbohrung (7).

11. Kolben-Zylinder-Baueinheit nach Anspruch 10,
**dadurch gekennzeichnet,**
**daß** die Höhe des Tragrings kleiner ist als der halbe Durchmesser der Nabenbohrung (7).

12. Kolben-Zylinder-Baueinheit nach Anspruch 11,
**dadurch gekennzeichnet,**
**daß** die Höhe des Tragrings (9) < 20% des Durchmessers der Nabenbohrung (7) ist.

13. Kolben-Zylinder-Baueinheit nach einem der vorhergehenden Ansprüche,
**dadurch gekennzeichnet,**
**daß** zwischen Tragring (9) und Nabe (3) ein Adapterstück liegt.

## Claims

1. Piston-cylinder assembly for an internal-combustion engine, with a shaftless piston (1) which consists of a piston head (2) with an annular portion for receiving piston rings, and hubs (3) extending from the piston head (2) with hub apertures (7) for receiving a piston pin, and with a cylinder in which the piston (1) is arranged so as to be slidably displaceable, **characterised in that** at least one supporting ring (9) is placed on the hubs (3) and, together with the piston head (2), guides the piston (1) in the cylinder.

2. Piston-cylinder assembly according to claim 1, **characterised in that** the supporting ring (9) has an internal screw thread and the hubs (3) have an external screw thread and the supporting ring (9) is screwed onto the hubs (3).

3. Piston-cylinder assembly according to claim 1, **characterised in that** the supporting ring (9) is screwed onto the hubs (3) with a plurality of screws.

4. Piston-cylinder assembly according to claim 1, **characterised in that** the supporting ring (9) is shrunk onto the hubs (3).

5. Piston-cylinder assembly according to claim 1, **characterised in that** the supporting ring (9) is located so as to be fixed on the inside in a groove (8) located in the hubs (3).

6. Piston-cylinder assembly according to claim 1, **characterised in that** the supporting ring (9) is pinned to the hubs (3).

7. Piston-cylinder assembly according to claim 1, **characterised in that** the supporting ring (9) is welded to the hubs (3).

8. Piston-cylinder assembly according to one of the preceding claims, **characterised in that** the supporting ring (9) has a T-shaped cross-section.

9. Piston-cylinder assembly according to one of the preceding claims, **characterised in that** the centre of gravity of the supporting ring (9) is located in a plane perpendicular to the support face of the supporting ring, which plane is arranged a maximum of 15% of the cylinder diameter below or above the pin axis plane.

10. Piston-cylinder assembly according to one of the preceding claims, **characterised in that** the height of the supporting ring (9) is smaller than the diameter of the hub aperture (7).

11. Piston-cylinder assembly according to claim 10, **characterised in that** the height of the supporting ring is smaller than the radius of the hub aperture (7).

12. Piston-cylinder assembly according to claim 11, **characterised in that** the height of the supporting ring (9) is less than 20% of the diameter of the hub aperture (7).

13. Piston-cylinder assembly according to one of the preceding claims, **characterised in that** an adapter piece is located between supporting ring (9) and hub (3).

## Revendications

1. Ensemble piston-cylindre destiné à un moteur à combustion interne comportant un piston (1) sans jupe, qui est constitué d'une partie de segments destinée à recevoir des segments de piston et de bossages d'axe de piston (3) partant de la tête de piston (2) et comportant des trous de pistons (7) destinés à recevoir un axe de piston, et d'un cylindre, dans lequel le piston (1) est monté capable de translation par glissement, **caractérisé en ce qu'**au moins un segment porteur (9) est posé sur les bossages d'axe de piston (3) et, conjointement avec la tête de cylindre (2), guide le piston (1) dans le cylindre.

2. Ensemble piston-cylindre selon la revendication 1, **caractérisé en ce que** le segment porteur (9) est taraudé et les bossages d'axe de piston (3) sont filetés et **en ce que** le segment porteur (9) est vissé sur les bossages d'axe de piston (3).

3. Ensemble piston-cylindre selon la revendication 1, **caractérisé en ce que** le segment porteur (9) est vissé par plusieurs vis sur les bossages d'axe de piston (3).

4. Ensemble piston-cylindre selon la revendication 1, **caractérisé en ce que** le segment porteur (9) est emmanché sur les bossages d'axe de piston (3).

5. Ensemble piston-cylindre selon la revendication 1, **caractérisé en ce que** le segment porteur (9) est posé, exerçant une pression élastique vers l'intérieur, dans l'une des rainures situées dans les bossages d'axe de piston (3).

6. Ensemble piston-cylindre selon la revendication 1, **caractérisé en ce que** le segment porteur (9) est goupillé avec les bossages d'axe de piston (3).

7. Ensemble piston-cylindre selon la revendication 1, **caractérisé en ce que** le segment porteur (9) est soudé avec les bossages d'axe de piston (3).

8. Ensemble piston-cylindre selon la revendication 1, **caractérisé en ce que** le segment porteur (9) présente une section transversale en T.

9. Ensemble piston-cylindre selon l'une des revendications précédentes, **caractérisé en ce que** le centre de gravité du segment porteur (9) est situé dans un plan perpendiculaire à la surface porteuse du segment porteur, qui se situe au maximum sur 15 % du diamètre du cylindre, au-dessus et au-dessous du plan de l'axe du goujon.

10. Ensemble piston-cylindre selon l'une des revendications précédentes, **caractérisé en ce que** la hauteur du segment porteur (9) est inférieure au diamètre du trou(7) du bossage d'axe de piston.

11. Ensemble piston-cylindre selon la revendication 10 **caractérisé en ce que** la hauteur du segment porteur est inférieure à la moitié du segment porteur du trou (7) de bossage d'axe de piston.

12. Ensemble piston-cylindre selon la revendication 11 **caractérisé en ce que** le segment porteur (9) est inférieur à 20 % du diamètre du trou(7) de bossage d'axe de piston.

13. Ensemble piston-cylindre selon l'une des revendications précédentes, **caractérisé en ce qu'**une pièce d'adaptation est située entre le segment porteur (9) et le bossage d'axe de piston (3).
